# EUROPEAN PATENT APPLICATION

(11) **EP 4 764 089 A1**
(43) Date of publication of application: **24.06.2026**
(21) Application number: 25223178.2
(22) Date of filing: 12.12.2025
(51) Int. Cl.: E02F 9/08

(54) **WORKING MACHINE**

(30) Priority: 18.12.2024 JP 2024221553
(71) Applicant: Yanmar Holdings Co., Ltd., Osaka-shi, Osaka (JP)
(72) Inventor: KITAHARA, Satoshi, Chikugo-shi (JP)
(74) Representative: Sekiguchi, Kazuya

(57) **Abstract**

[Problem] To suppress an increase in length of a pipe connecting a control valve and a hydraulic pump without interfering with a battery unit.

[Solution] A working machine 100 includes an electric motor 2, a battery unit 3, a control valve 4, and a pipe 5. The electric motor 2 drives a hydraulic pump 1. The battery unit 3 supplies electric power to the electric motor 2. The control valve 4 controls flow of hydraulic oil pressure-fed from the hydraulic pump 1. The pipe 5 connects the hydraulic pump 1 and the control valve 4. The pipe 5 extends from one of the hydraulic pump 1 and the control valve 4 to the other via the lower side of the battery unit 3.

## Description

### TECHNICAL FIELD

The present invention relates to a working machine.

### BACKGROUND ART

Conventionally, there has been known a working machine including a control valve that controls a flow rate and a supply destination of hydraulic oil discharged from a hydraulic pump. For example, in a working machine of Patent Document 1, a prime mover, a hydraulic pump, a power source, a control valve, and the like are housed in a machine room arranged behind a cab of a turning frame. The hydraulic pump is driven by the prime mover. The control valve is interposed between the turning motor and the hydraulic pump, and controls a direction and a flow rate of pressure oil discharged from the hydraulic pump and supplied to the turning motor.

### PRIOR ART DOCUMENT

### PATENT DOCUMENT

Patent Document 1: JP-A-2018-155079

### SUMMARY OF INVENTION

### TECHNICAL PROBLEM

Incidentally, a battery unit such as the power source of Patent Document 1 tends to be increased in size in order to increase the storage capacity. Therefore, there is a possibility that the battery unit interferes with a pipe (oil passage member) between the control valve and the hydraulic pump depending on an arrangement position. If the pipe is arranged to detour the battery in order to prevent this interference, it is necessary to make the pipe longer.

In view of the above circumstances, an object of the present invention is to suppress an increase in length of a pipe between a control valve and a hydraulic pump without interfering with a battery unit.

### SOLUTION TO PROBLEM

In order to achieve the above object, a working machine according to one aspect of the present invention includes an electric motor, a battery unit, a control valve, and a pipe. The electric motor drives a hydraulic pump. The battery unit supplies electric power to the electric motor. The control valve controls flow of hydraulic oil pressure-fed from the hydraulic pump. The pipe connects the hydraulic pump and the control valve. The pipe extends from one of the hydraulic pump and the control valve to the other via a lower side of the battery unit.

Further features and advantages of the present invention will become more apparent from the following embodiment.

### ADVANTAGEOUS EFFECTS OF INVENTION

According to the present invention, it is possible to suppress the increase in the length of the pipe connecting the control valve and the hydraulic pump without interfering with the battery unit.

### BRIEF DESCRIPTION OF DRAWINGS

Fig. 1 is a schematic side view illustrating a configuration example of a hydraulic excavator according to the present embodiment;
Fig. 2 is a block diagram schematically illustrating configurations of an electrical system and a hydraulic system of the hydraulic excavator;
Fig. 3 is a perspective view of the interior of an engine room as viewed obliquely upward from below; and
Fig. 4 is a perspective view of the interior of the engine room as viewed obliquely downward from above.

### DESCRIPTION OF EMBODIMENTS

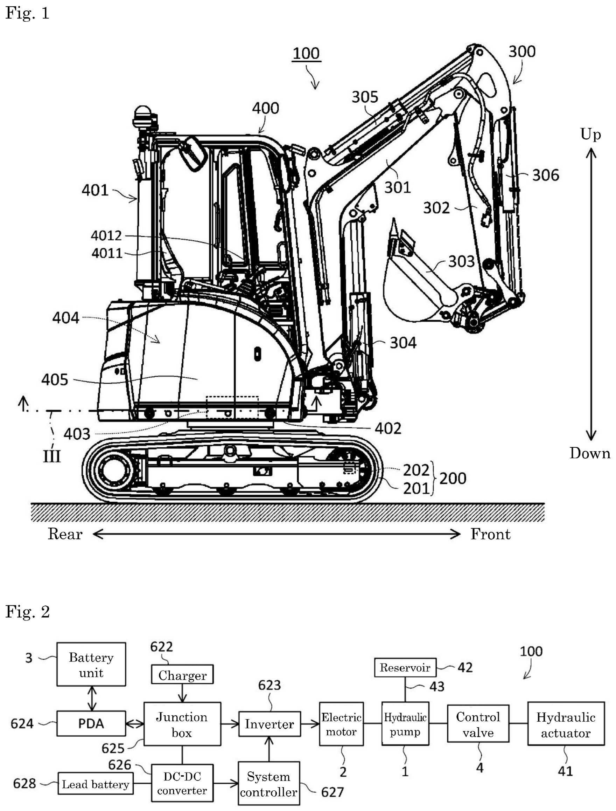

Hereinafter, an embodiment of the present invention will be described with reference to the drawings. Fig. 1 is a schematic side view illustrating a configuration example of a hydraulic excavator 100 according to the present embodiment. Fig. 2 is a block diagram schematically illustrating configurations of an electrical system and a hydraulic system of the hydraulic excavator 100. The hydraulic excavator 100 is an example of a "working machine" of the present invention.

### <1. Hydraulic Excavator 100>

The hydraulic excavator 100 includes a lower traveling body 200, an implement 300, and an upper turning body 400.

Note that directions in the present disclosure are defined as follows. First, in the upper turning body 400, a direction from one of a front side and a back side of a driver's seat 4011 to be described later on which an operator (an operating person or a driver) sits toward the other is defined as a "front-rear direction". In the "front-rear direction", a direction from the back side to the front side of the driver's seat 4011 is a "front side", and a direction from the front side to the back side of the driver's seat 4011 is a "rear side". Therefore, in a state where the upper turning body 400 is not turning with respect to the lower traveling body 200 (turning angle: 0°), a front-rear direction of the upper turning body 400 coincides with a direction in which the lower traveling body 200 moves forward and rearward.

In a state where the front is viewed from the rear side, a direction from one of a left side and a right side of the driver's seat 4011 toward the other is a "left-right direction". In the left-right direction, a direction toward the left side of the driver's seat 4011 is a "left side", and a direction toward the right side of the driver's seat 4011 is a "right side".

A direction from one of the lower travelling body 200 and the upper turning body 400 toward the other is an "up-down direction". In the up-down direction, a direction from the lower travelling body 200 to the upper turning body 400 is an "upper side", and a direction from the upper turning body 400 to the lower travelling body 200 is a "lower side". Therefore, when the hydraulic excavator 100 is arranged on a horizontal plane whose normal direction is the vertical direction, the up-down direction of the hydraulic excavator 100 coincides with the vertical direction. Further, the upper side coincides with the vertically upper side, and the lower side coincides with the vertically lower side.

The front-rear direction, the left-right direction, and the up-down direction are perpendicular to each other. Note that the left-right direction in the present disclosure is an example of a "first direction" of the present invention. The "right side" is an example of "one side in the first direction" of the present invention, and the "left side" is an example of the "other side in the first direction" of the present invention. The front-rear direction in the present disclosure is an example of a "second direction" of the present invention. In addition, the "front side" is an example of "one side in the second direction" of the present invention, and the "rear side" is an example of the "other side in the second direction" of the present invention.

However, the above definitions of directions are merely used for description, and are not intended to limit the actual positional relationships and directions.

### <1-1. Lower Traveling Body 200>

The lower traveling body 200 includes a pair of left and right crawlers 201 and a pair of left and right traveling motors 202. Each of the traveling motors 202 is a hydraulic motor. The left and right traveling motors 202 drive the left and right crawlers 201, respectively, so that the hydraulic excavator 100 can be moved forward and rearward.

### <1-2. Implement 300>

The implement 300 includes a boom 301, an arm 302, and a bucket 303. By independently driving the boom 301, the arm 302, and the bucket 303, excavation work of earth, sand, and the like can be performed. The boom 301 is rotated by a boom cylinder 304. A base end portion of the boom cylinder 304 is supported by a front portion of the upper turning body 400 and is movable so as to be capable of freely extending and contracting. The arm 302 is rotated by an arm cylinder 305. A base end portion of the arm cylinder 305 is supported by the boom 301 and is movable so as to be capable of freely extending and contracting. The bucket 303 is rotated by a bucket cylinder 306. A base end portion of the bucket cylinder 306 is supported by the arm 302 and is movable so as to be capable of freely extending and contracting. The boom cylinder 304, the arm cylinder 305, and the bucket cylinder 306 are configured with hydraulic cylinders.

### <1-3. Upper Turning Body 400>

The upper turning body 400 is located above the lower traveling body 200 and is provided to be turnable with respect to the lower traveling body 200 via a turning bearing (not illustrated). The upper turning body 400 includes a steering unit 401, a body frame 402, a turning motor 403, an engine room 404, and a hood 405. The driver's seat 4011 is arranged in the steering unit 401. Various levers 4012 are arranged around the driver's seat 4011. When the operator sits on the driver's seat 4011 and operates the levers 4012, a hydraulic actuator 41 (see Fig. 2) is driven. As a result, the hydraulic excavator 100 can perform traveling of the lower traveling body 200, excavation work by the implement 300, turning of the upper turning body 400, and the like. The body frame 402 has a plate shape extending perpendicularly to the up-down direction. Various devices and the like mounted on the steering unit 401, the turning motor 403, and the engine room 404 are mounted on the body frame 402. The hood 405 is a housing having the engine room 404 therein, and is arranged below the steering unit 401. The hood 405 covers the engine room 404 together with a platform of the steering unit 401, the body frame 402, and the like. The upper turning body 400 turns via the turning bearing by driving of the turning motor 403 which is a hydraulic motor.

The upper turning body 400 further includes an electric motor 2, a battery unit 3, a cable 31 for power supply, a charger 622, an inverter 623, a power drive unit (PDU) 624, a junction box 625, a DC-DC converter 626, a system controller 627, and a lead battery 628. The upper turning body 400 further includes a hydraulic pump 1, a control valve 4, an oil passage member 5 having a tubular shape, a hydraulic actuator 41, and a reservoir 42. These are all housed in the engine room 404.

Note that the hydraulic excavator 100 may have a configuration in which a hydraulic device such as the hydraulic actuator 41 and an actuator driven by electric power are used in combination. Examples of the actuator driven by electric power include an electric traveling motor, an electric cylinder, and an electric turning motor.

### <1-3-1. Configuration of Electrical System>

The electric motor 2 includes a permanent magnet motor, an induction motor, and the like, and drives the hydraulic pump 1. The electric motor 2 is supplied with electric power from the battery unit 3 via the PDA 624, the junction box 625, and the inverter 623. The electric motor 2 is supported on the body frame 402 via a vibrationproof support member.

The battery unit 3 includes, for example, a chargeable/dischargeable secondary battery such as a lithium ion battery, and supplies electric power to the electric motor 2. The battery unit 3 may be configured by unitizing a plurality of battery cells as in the present embodiment, or may be configured with a single battery cell.

The charger 622 converts an AC voltage supplied from a commercial power source via a power supply cable (not illustrated) into a DC voltage, and outputs the DC voltage to the inverter 623.

The inverter 623 converts the DC voltage supplied from the battery unit 3, into an AC voltage, and supplies the AC voltage to the electric motor 2. As a result, the electric motor 2 rotates. The AC voltage (current) is supplied from the inverter 623 to the electric motor 2 based on a rotation command output from the system controller 627.

The PDU 624 is a battery control unit that controls an internal battery relay to control input/output of the battery unit 3.

The junction box 625 includes a charger relay, an inverter relay, a fuse, and the like. A voltage output from the above charger 622 is supplied to the battery unit 3 via the junction box 625 and the PDU 624. In addition, a voltage output from the battery unit 3 is supplied to the inverter 623 via the PDU 624 and the junction box 625.

The DC-DC converter 626 steps down a DC voltage of a high voltage (for example, 300 V) supplied from the battery unit 3 via the junction box 625 to a low voltage (for example, 12 V). The voltage output from the DC-DC converter 626 is supplied to the system controller 627 and the like together with the output from the lead battery 628.

The system controller 627 includes an electronic control unit also called an ECU, and controls the respective components of the hydraulic excavator 100.

The lead battery 628 outputs a DC voltage of a low voltage (for example, 12 V). The output from the lead battery 628 is supplied to, for example, the system controller 627 as a control voltage.

### <1-3-2. Configuration of Hydraulic System>

The hydraulic pump 1 is connected to an output shaft of the electric motor 2 and supplies hydraulic oil (so-called pressure oil) to a hydraulic motor and a hydraulic cylinder. Note that examples of the hydraulic motor include the left and right travel motors 202 and the turning motor 403. Examples of the hydraulic cylinder include the boom cylinder 304, the arm cylinder 305, and the bucket cylinder 306. In addition, the hydraulic motor and the hydraulic cylinder driven by the hydraulic oil supplied from the hydraulic pump 1 are collectively referred to as the hydraulic actuator 41.

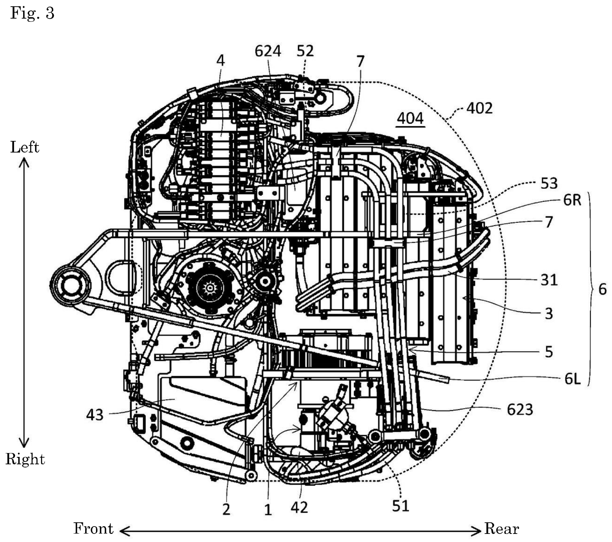

The hydraulic pump 1 may be a variable displacement pump or a fixed displacement pump. In the present embodiment, the number of the hydraulic pumps 1 is one (see Fig. 3). However, the present invention is not limited to this example, and a plurality of the hydraulic pumps 1 may be provided.

The hydraulic pump 1 is connected to the reservoir 42 via a hydraulic hose 43. The reservoir 42 is a hydraulic oil tank that contains (stores) the hydraulic oil. When the hydraulic pump 1 is driven by the electric motor 2, the hydraulic oil in the reservoir 42 is supplied to the hydraulic actuator 41 via the control valve 4. As a result, the hydraulic actuator 41 is driven.

The control valve 4 includes a plurality of directional control valves and controls flow (a flow direction, a flow rate, and the like) of the hydraulic oil pressure-fed from the hydraulic pump 1. For example, the control valve 4 supplies the hydraulic oil to the hydraulic actuator 41 and the like.

The oil passage member 5 is an example of a "pipe" of the present invention, and connects the hydraulic pump 1 and the control valve 4. The hydraulic oil pressure-fed from the hydraulic pump 1 to the control valve 4 can flow through the oil passage member 5. As the oil passage member 5, for example, a hydraulic hose, a steel pipe, and the like can be adopted. However, this example does not exclude a configuration in which the oil passage member 5 is neither a hydraulic hose nor a steel pipe.

### <1-3-3. Internal Configuration of Engine Room 404>

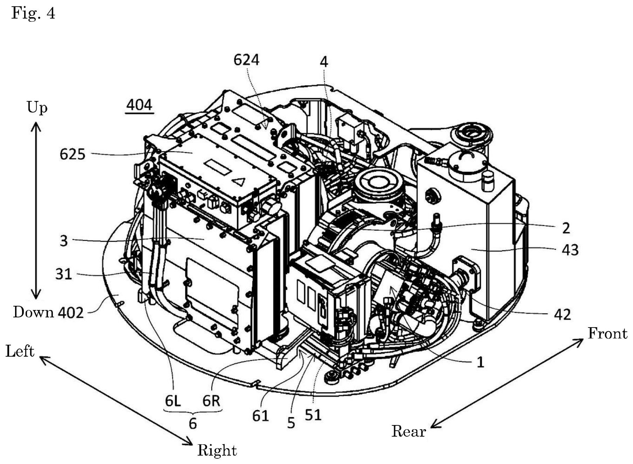

Fig. 3 is a bottom view illustrating an exemplary internal configuration of the engine room 404 of the hydraulic excavator 100 as viewed from below. Fig. 4 is a perspective view illustrating an exemplary internal configuration of the engine room 404 of the hydraulic excavator 100 as viewed obliquely from above. In Fig. 3, the interior of the engine room 404 is viewed upward from a plane that includes a two-dot chain line III-III in Fig. 1 and is perpendicular to the up-down direction.

As illustrated in Fig. 3, the oil passage member 5 extends from one of the hydraulic pump 1 and the control valve 4 to another via the lower side of the battery unit 3. Since the oil passage member 5 extends via the lower side of the battery unit 3, the oil passage member 5 can be arranged without greatly detouring the battery unit 3 even if the battery unit 3 having a large size and large capacity is arranged in the engine room 404. Therefore, the hydraulic excavator 100 can suppress an increase in length of the oil passage member 5 that connects the hydraulic pump 1 and the control valve 4 without interfering with the battery unit 3.

Note that the single oil passage member 5 connecting the hydraulic pump 1 and the control valve 4 may be a single tubular member (that is, a single pipe) or may include a plurality of tubular members connected in series (that is, a plurality of pipes connected in series). For example, in the latter case, the oil passage member 5 may include a first oil passage member 51, a second oil passage member 52, and a third oil passage member 53. The first oil passage member 51 is an example of a "first pipe" of the present invention, and has a tubular shape in the present embodiment and extends from the hydraulic pump 1. The second oil passage member 52 is an example of a "second pipe" of the present invention, has a tubular shape in the present embodiment, and extends from the control valve 4. The third oil passage member 53 is an example of a "third pipe" of the present invention, and in the present embodiment, has a tubular shape, is arranged on the lower side of the battery unit 3, and connects the first oil passage member 51 and the second oil passage member 52. As the oil passage member 5 is divided in this manner, it is easy to arrange and attach the oil passage member 5.

Note that the first oil passage member 51, the second oil passage member 52, and the third oil passage member 53 are different members in the present embodiment. However, the present invention is not limited to this example, and the first oil passage member 51 and the second oil passage member 52 may be integrated, that is, may be different portions of a single member. Alternatively, the second oil passage member 52 and the third oil passage member 53 may be integrated, that is, may be different portions of a single member.

Preferably, the control valve 4 is arranged on one side in the first direction intersecting the up-down direction of the body frame 402. The hydraulic pump 1 is arranged on the other side in the first direction. For example, on the body frame 402 in the present embodiment, the control valve 4 is arranged on the left side, and the hydraulic pump 1 is arranged on the right side. The hydraulic pump 1 is connected to the right side of the electric motor 2. Thus, the hydraulic pump 1 and the control valve 4 can be efficiently arranged in the body frame 402. Even when the hydraulic pump 1 and the control valve 4 are separated with a wide gap due to the arrangement of the battery unit 3, the hydraulic excavator 100 can suppress the length of the oil passage member 5 from becoming longer than necessary in order to prevent interference with the battery unit 3.

More preferably, in the first direction, the electric motor 2 is arranged between the battery unit 3 and the hydraulic pump 1. In the present embodiment, the electric motor 2 is arranged between the battery unit 3 and the hydraulic pump 1 in the left-right direction. Thus, the electric motor 2 can be arranged closer to the battery unit 3. Therefore, the cable 31 (see Fig. 3) for supplying power from the battery unit 3 to the electric motor 2 can be further shortened. Therefore, the cable 31 can be efficiently arranged.

Note that electric power output from the battery unit 3 flows through the cable 31. Preferably, the cable 31 is arranged between the battery unit 3 and the oil passage member 5. Since the cable 31 and the oil passage member 5 are three-dimensionally arranged in this manner, it is possible to arrange the cable 31 for power supply in a space-saving manner.

Preferably, the battery unit 3 is arranged on one side in the first direction intersecting the up-down direction on the body frame 402, for example, on the left side on the body frame 402 in the present embodiment. Thus, the battery unit 3 can be efficiently arranged in the body frame 402.

More preferably, the control valve 4 is arranged on one side in the second direction with respect to the battery unit 3. Note that the second direction is a direction perpendicular to the up-down direction and the first direction. For example, in the present embodiment, the control valve 4 is arranged on the front side of the battery unit 3 on the body frame 402. Thus, in the body frame 402, the control valve 4 can be efficiently arranged without interfering with the battery unit 3.

As illustrated in Fig. 3, a pair of plate parts 6 protrudes from the body frame 402. That is, the upper turning body 400 further includes the pair of plate parts 6. The pair of plate parts 6 is arranged side by side in the first direction and extends in the second direction. In the present embodiment, the pair of plate parts 6 is arranged side by side in the left-right direction and extends in the front-rear direction toward the rear side from a connection portion with the implement 300 arranged at a front end portion of the body frame 402. The pair of plate parts 6 is a plate member for reinforcing the connection portion. Hereinafter, in Fig. 3, out of the pair of plate parts 6, the left plate part 6 may be referred to as a "plate part 6L", and the right plate part 6 may be referred to as a "plate part 6R".

Preferably, the oil passage member 5 penetrates the pair of plate parts 6 and extends in the first direction. For example, in the present embodiment, a recess 61 is arranged in each of the plate parts 6L and 6R. The recess 61 is recessed upward from lower portions of the plate parts 6L and 6R and is open on both sides in the left-right direction. The oil passage member 5 extends in the left-right direction through the recesses 61 of the plate parts 6L and 6R. However, the present invention is not limited to this example, and a through-hole through which the oil passage member 5 passes may be arranged instead of at least one of the recesses 61. Thus, the oil passage member 5 can be arranged without detouring the pair of plate parts 6 (6L and 6R). Therefore, it is possible to suppress an increase in the length of the oil passage member 5.

Preferably, the control valve 4 is arranged on one side in the first direction with respect to the pair of plate parts 6. For example, in the present embodiment, the control valve 4 is arranged on the left side of the left plate part 6L. Thus, the control valve 4 can be arranged without interfering with the pair of plate parts 6 (6L and 6R).

More preferably, the hydraulic pump 1 is arranged on the other side in the first direction with respect to the pair of plate parts 6. For example, in the present embodiment, the hydraulic pump 1 is arranged on the right side of the right plate part 6R. Thus, the hydraulic pump 1 is arranged on a side opposite to the control valve 4 in the first direction (left-right direction in Fig. 3) with the pair of plate parts 6 (6L and 6R) interposed therebetween. Therefore, in the body frame 402, the hydraulic pump 1 can be efficiently arranged without interfering with the control valve 4.

Preferably, a holding part 7 may be arranged on the body frame 402. That is, the upper turning body 400 may further include the holding part 7. The holding part 7 is arranged between the pair of plate parts 6 and holds the oil passage member 5. Thus, the holding part 7 can suppress or prevent vibration of the oil passage member 5.

More preferably, the holding part 7 holds the oil passage member 5 via an elastic member or a buffer member. Thus, the vibration of the oil passage member 5 can be more effectively suppressed or prevented by the holding part 7. Furthermore, generation of noise caused by the vibration of the oil passage member 5 in the holding part 7 can be suppressed or prevented. However, this example does not exclude a configuration in which the holding part 7 holds the oil passage member 5 without interposing the elastic member or the buffer member.

In Fig. 3, a pair of the holding parts 7 holds the oil passage member 5 on the lower side of the battery unit 3. However, the present invention is not limited to this example, and the number of the holding parts 7 may be one or three or more. At least one holding part 7 may not be arranged on the lower side of the battery unit 3.

### <2. Remarks>

The embodiment of the present invention has been described above. Note that the above embodiment is an example, and it is understood by those skilled in the art that various modifications can be made to combinations of the respective components and the respective processes, and these modifications are also within the scope of the present invention.

For example, the hydraulic excavator 100, which is a construction machine, has been described as an example of the "working machine" of the present invention in the above embodiment. However, this example does not exclude a configuration in which the present invention is applied to a working machine other than the hydraulic excavator 100. For example, the "working machine" of the present invention may be another construction machine such as a wheel loader, or an agricultural machine such as a combine harvester or a tractor.

### <3. Summary>

Hereinafter, the embodiment described so far will be summarized.

For example, a working machine 100 disclosed herein may include:
an electric motor 2 that drives a hydraulic pump 1;
a battery unit 3 that supplies electric power to the electric motor 2;
a control valve 4 that controls flow of hydraulic oil pressure-fed from the hydraulic pump 1; and
a pipe 5 that connects the hydraulic pump 1 and the control valve 4, in which
the pipe 5 extends from one of the hydraulic pump 1 and the control valve 4 to the other via a lower side of the battery unit 3 (first configuration).

The working machine 100 having the first configuration may be configured such that
the pipe 5 includes
a first pipe 51 having a tubular shape and extending from the hydraulic pump 1,
a second pipe 52 having a tubular shape and extending from the control valve 4, and
a third pipe 53 having a tubular shape, arranged on the lower side of the battery unit 3, and connecting the first pipe 51 and the second pipe 52 (second configuration).

Further, the working machine 100 having the first or second configuration may further include
a body frame 402 on which the hydraulic pump 1 and the control valve 4 are mounted, in which
the control valve 4 is arranged on one side (a left side) in a first direction intersecting an up-down direction of the body frame 402, and
the hydraulic pump 1 is arranged on the other side (a right side) in the first direction (third configuration).

Further, the working machine 100 having the third configuration may be configured such that
the electric motor 2 is further mounted on the body frame 402, and
the electric motor 2 is arranged between the battery unit 3 and the hydraulic pump 1 (fourth configuration).

Further, the working machine 100 having the third or fourth configuration may be configured such that
the battery unit 3 is further mounted on the body frame 402, and
the battery unit 3 is arranged on one side (a left side) in a first direction intersecting an up-down direction on the body frame 402 (fifth configuration).

Further, the working machine 100 having the fifth configuration may be configured such that
the control valve 4 is arranged on one side (a front side) in a second direction (front-rear direction) perpendicular to the up-down direction and the first direction (left-right direction) with respect to the battery unit 3 (sixth configuration).

The working machine 100 having any one of the first to sixth configurations may further include:
a body frame 402 on which the hydraulic pump 1 and the control valve 4 are mounted; and
a pair of plate parts 6 protruding from the body frame 402 and arranged in a first direction (left-right direction) intersecting an up-down direction, in which
the pair of plate parts 6 extends in a second direction (front-rear direction) perpendicular to the up-down direction and the first direction (left-right direction), and
the pipe 5 penetrates the pair of plate parts 6 and extends in the first direction (left-right direction) (seventh configuration).

Further, the working machine 100 having the seventh configuration may be configured such that the control valve 4 is arranged on one side (a left side) in the first direction with respect to the pair of plate parts 6 (eighth configuration).

Further, the working machine 100 having the eighth configuration may be configured such that the hydraulic pump 1 is arranged on the other side (a right side) in the first direction with respect to the pair of plate parts 6 (ninth configuration).

The working machine 100 having any one of the seventh to ninth configurations may further include
a holding part 7 that is arranged between the pair of plate parts 6 in the body frame 402 and holds the pipe 5, in which
the pipe 5 is either a hydraulic hose or a steel pipe (tenth configuration).

The working machine 100 having any one of the first to tenth configurations may further include
a cable 31 through which electric power output from the battery unit 3 flows, in which
the cable 31 is arranged between the battery unit 3 and the pipe 5 (eleventh configuration).

The present invention is applicable to working machines such as construction machines and agricultural machines.

### LIST OF REFERENCE SIGNS

- 100: Hydraulic excavator (working machine)
- 200: Lower traveling body
- 201: Crawler
- 202: Traveling motor
- 300: Implement
- 301: Boom
- 302: Arm
- 303: Bucket
- 304: Boom cylinder
- 305: Arm cylinder
- 306: Bucket cylinder
- 400: Upper turning body
- 401: Steering unit
- 4011: Driver's seat
- 4012: Lever
- 402: Body frame
- 403: Turning motor
- 404: Engine room
- 405: Hood
- 600: Electrical device
- 622: Charger
- 623: Inverter
- 624: PDU
- 625: Junction box
- 626: DC-DC converter
- 627: System controller
- 628: Lead battery
- 1: Hydraulic pump
- 2: Electric motor
- 3: Battery unit
- 31: Cable
- 4: Control valve
- 41: Hydraulic actuator
- 42: Reservoir
- 43: Hydraulic hose
- 5: Oil passage member (pipe)
- 51: First oil passage member (first pipe)
- 52: Second oil passage member (second pipe)
- 53: Third oil passage member (third pipe)
- 6, 6L, 6R: Plate part
- 61: Recess
- 7: Holding part

## Claims

1. A working machine comprising:
an electric motor configured to drive a hydraulic pump;
a battery unit configured to supply electric power to the electric motor;
a control valve configured to control flow of hydraulic oil pressure-fed from the hydraulic pump;
a pipe configured to connect the hydraulic pump and the control valve, wherein
the pipe extends from one of the hydraulic pump and the control valve to another via a lower side of the battery unit.

2. The working machine according to claim 1, wherein
the pipe includes
a first pipe that has a tubular shape and extends from the hydraulic pump,
a second pipe that has a tubular shape and extends from the control valve, and
a third pipe that has a tubular shape, is arranged on the lower side of the battery unit, and connects the first pipe and the second pipe.

3. The working machine according to claim 1 or 2, further comprising
a body frame on which the hydraulic pump and the control valve are mounted, wherein
the control valve is arranged on one side in a first direction intersecting an up-down direction of the body frame, and
the hydraulic pump is arranged on another side in the first direction.

4. The working machine according to claim 3, wherein
the electric motor is further mounted on the body frame, and
the electric motor is arranged between the battery unit and the hydraulic pump.

5. The working machine according to claim 3, wherein
the battery unit is further mounted on the body frame, and
the battery unit is arranged on the one side in the first direction intersecting the up-down direction of the body frame.

6. The working machine according to claim 5, wherein the control valve is arranged on one side in a second direction perpendicular to the up-down direction and the first direction with respect to the battery unit.

7. The working machine according to claim 1 or 2, further comprising:
a body frame on which the hydraulic pump and the control valve are mounted; and
a pair of plate parts that protrudes from the body frame and is arranged side by side in a first direction intersecting an up-down direction, wherein
the pair of plate parts extends in a second direction perpendicular to the up-down direction and the first direction, and
the pipe penetrates the pair of plate parts and extends in the first direction.

8. The working machine according to claim 7, wherein the control valve is arranged on one side in the first direction with respect to the pair of plate parts.

9. The working machine according to claim 8, wherein the hydraulic pump is arranged on another side in the first direction with respect to the pair of plate parts.

10. The working machine according to claim 7, further comprising
a holding part that is arranged between the pair of plate parts in the body frame and holds the pipe, wherein
the pipe is either a hydraulic hose or a steel pipe.

11. The working machine according to claim 1 or 2, further comprising
a cable through which electric power output from the battery unit flows, wherein
the cable is arranged between the battery unit and the pipe.
